# EUROPEAN PATENT APPLICATION

(11) **EP 4 086 523 A1**
(43) Date of publication of application: **09.11.2022**
(21) Application number: 21172021.4
(22) Date of filing: 04.05.2021
(51) Int. Cl.: F24C 15/20, B01D 45/08, B01D 45/12

(54) **SEPARATION AND/OR FILTERING DEVICE AND EXTRACTION DEVICE**

(71) Applicant: ELECTROLUX APPLIANCES AKTIEBOLAG, 105 45 Stockholm (SE)
(72) Inventor: PUOTI, Eduardo, 47122 Forli (IT); RADHIMA, Ines, 47122 Forli (IT)
(74) Representative: Electrolux Group Patents

(57) **Abstract**

The present invention concerns a separation and/or filtering device (48) for separation and/or filtering of substances from an airstream. The separation and/or filtering device (48) comprises a duct-shaped casing (60) enclosing a flow region (60a) for the airstream to flow therethrough. At least one separation surface (56) configured to effect a separation of at least a portion of the substances is arranged in the flow region (60a).

According to the invention, the airstream at least partially slides along the separation surface (56), wherein the at least one separation surface (56) is configured to cause the separation of the at least a portion of the substances from the airstream. The at least a portion of substances remains adhered to or gets caught on the at least one separation surface (56).

Further disclosed is an extraction device (14) comprising such a separation and/or filtering device (48).

## Description

The present invention relates to a separation and/or filtering device for the separation and/or the filtering of particles and/or droplets and/or odorous substances and/or volatile organic compounds according to the preamble of claim 1. The present invention further relates to an extraction device, in particular an extraction hood or an extraction unit of a combination appliance according to claim 18.

During the performance of cooking activities under use of a cooking hob, cooking vapours are generated, which are distributed over the cooking area. In order to avoid these cooking vapours to be spread throughout the entire kitchen space, an arrangement of an extraction device, particularly an extractor hood, is common. Said extraction device is operated in parallel to the cooking hob, thereby sucking in those cooking vapours in order to filter out particles and tiny droplets from the vapours and/or to blow the vapours to the outside of the building. While it has been common to arrange such an extractor hood above the cooking area, in recent years downdraft extraction devices have been finding a growing market. Such kind of extraction device is usually arranged as an extraction unit below a worktop of the related cooking hob and it comprises at least one fan for sucking air from the cooking area through an opening arranged in the worktop. Such a configuration of a cooking hob and an extraction unit being connected together in a combined arrangement is commonly called a combination appliance.

In order to perform said filtration, filter elements are usually implemented in the air guidance system, particularly in an air duct, of the extraction device. These filter elements are commonly designed as flat filters, ordinarily positioned upstream of the fan and extending over the entire cross-section of the air duct, so that no bypass for the airstream is provided. Naturally, the filter capacity of these flat filters is gradually decreasing over time, so that a user of the extraction device has to monitor constantly the degree of soiling in order to perform service activities in good time.

There are filter devices known, which operate with different approaches for the separation of particles and droplets. In particular, WO 2009/016441 A2 discloses a grease filter for trapping liquid and/or solid grease particles suspended in a fluid stream. The filter unit comprises a rotor, which traps the grease particles and is free to rotate around its axis of rotation. The rotor is at least partially fitted in a casing, which has an inlet for the fluid stream to be filtered and an outlet for the filtered fluid stream. The casing comprises a collection device for collecting particles trapped by the rotor and projected by the centrifugal force induced by rotation of the rotor with a radial component of motion with respect to the axis of rotation. The particles flow into the annular cavity, which is included in said collection device, by gravity.

DE 10 2007 011 664 A1 discloses a filter device for separation of soil particles, which has a housing with an inlet opening and an outlet opening. Several separation elements are arranged in the housing, which cause a repeated redirection of the airstream. Due to the higher inertia moment of the soil particles in the airstream, said redirection causes a separation of the particles at the surfaces of the separation elements. Further, each separation element includes a capillary cavity with a capillary opening, and the particles are guided into the capillary cavity through the capillary opening based on a pull effect of the air flow caused by a capillary effect.

It is an object of the present invention to provide a separation and/or filtering device for the separation and/or the filtering of particles and/or droplets and/or odorous substances and/or volatile organic compounds with an increased separation and/or filtration capacity and efficiency. According to a further object, an extraction device with a prolonged servicing interval shall be provided.

The object is achieved for a separation and/or filtering device according to the preamble of claim 1 by the features of the characterizing part of claim 1.

A separation and/or filtering device for separation and/or filtering of substances from an airstream is provided. Said substances may be particles and/or droplets and/or odorous substances and/or volatile organic compounds substances. For example, the substances are grease particles and/or any kind of water particles as comprised in steam. The separation and/or filtering device comprises a duct-shaped casing, which encloses a flow region for the airstream to flow therethrough. At least one separation surface, which is configured to effect a separation of at least a portion of the substances, is arranged in the flow region. According to the present invention, guiding means are provided, which are configured to cause the airstream to at least partially slide along the separation surface. Additionally, or alternatively, the guiding means are configured to cause at least a portion or a section of the airstream to slide along the separation surface. The at least one separation surface is configured to cause the separation of the at least a portion of the substances from the airstream. The guiding means are preferably arranged in the duct-shaped casing. Said substances, notably the at least a portion of substances, remain adhered to or get caught on the at least one separation surface, in this respect removing these substances from the airstream. Particularly, the separation surface comprises at least one surface area and the airstream may slide along this at least one surface area. The substances may remain adhered to or get caught on the at least one surface area of the separation surface. More specifically, the substances in the airstream comprise vapours and/or exhaust fumes, e. g. vapours sourcing from a cooking process.

A preferred embodiment of the present invention provides for a separation and/or filtering device with a separation surface, which comprises a filter surface or filter area. The filter surface or area provides a passage, preferably a filtering passage, for a part of the airstream. In addition, or as an alternative, the separation surface comprises a stripping or removing means for removing a portion of substances. In this embodiment, the filter surface or area and/or the stripping or removing means preferably comprises or comprise a mesh filter or a surface of a mesh filter. More specifically, the separation and/or filtering device may be designed in that way, that the airstream that flows therethrough is split into a portion, which passes through the filter surface or area, and a portion, which slides along the surface of the filter and/or moves forward along the flow region without passing through any filter element. Obviously, this can also mean that the portion of the airstream sliding along the separation surface is partially just passed on in order to be filtered at a later stage of its flow path by passing a filter surface or area or a filter element arranged further downstream. The segmenting of the airstream may also be influenced by the level of resistance provided by the filter surface or area, which level increases over time of using the separation and/or filtering device, e. g. during the operation of the extraction device including the separation and/or filtering device. It may be further influenced by the types of substances included in the actual airstream and/or by the level of soiling thereof. Finally, it may be also influenced by the airstream speed, mainly caused by the level of suction pressure or forced convection affecting the airstream. However, the advantage of such a segmenting is an increased filter efficiency, in particular because of a utilization of the entire filter surface and specifically the entire filter depth or thickness, since the airstream is provided with the opportunity to take the easiest flow path available.

The at least one deflection means may be included in the flow region and it may be configured to provide the airstream with at least one directional component orthogonally to a central axis of the flow region defined by the duct-shaped casing. Moreover, the deflection means preferably includes at least one separation surface and/or at least one surface area of the separation surface. Accordingly, the combination of deflection means and separation surface avoids the need to provide additional elements in the flow region, all of them have to be subjected to a cleaning process during the regular service activities to be performed on the separation and/or filtering device.

According to an embodiment, the at least one deflection means, is configured and/or arranged in the flow region such that at least a part or at least a section of the airstream performs a serpentine and/or helical movement. In a particularly specific embodiment, at least a first and a second deflection means are arranged in the flow region, which may be suitably arranged to cause a repeated deflection of the airstream, which repeated deflection contributes to an increased degree of separation of the substances in the airstream.

Said deflection, in particular repeated deflection, favourably results in a slowdown of the axial velocity and an increase of the tangential or transversal velocity of the airstream during its way through the flow region. More specifically, the increment of tangential or transversal velocity enhances the separation of substances, in particular grease separation and vapour condensation. This may be further promoted, when the dimensions or parameters of the involved elements and components of the separation and/or filtering device are configured such that the airstream advantageously slips over the entire cross-section of the flow region.

A first particularly specific embodiment of the present invention is characterized by a duct-shaped casing of the separation and/or filtering device, which encloses a flow region with a circular or oval-shaped cross-section. The embodiment may be further characterized in that the separation surface is arranged in a helical shape with at least one full spiral turn. More particularly, the helical shape includes a plurality of continuous spiral turns. In this respect, the separation surface may be designed like a surface of a screw thread, which surface may include both the upper and the lower sides thereof. This means that the airstream not only slides along a top side but also along a bottom side of the separation surface with undergoing the above-described separation process for the substances in the airstream, wherein "top side" and "bottom side" shall be understood in view of the direction of the airstream.

It is to be noted, that the helically shaped separation surface may be designed as a continuous part or, alternatively, by a plurality of separate single or plural, i. e. a small amount of, spiral turn or turns. In the case of plural separate single or plural spiral turns, it is preferred to provide a constant displacement between them. The interruption of continuity may enhance the separation effect due to an increased airstream displacement.

A second particularly specific embodiment of the present invention provides for a duct-shaped casing, which encloses a flow region with a rectangular or square cross-section. According to this embodiment, at least a first rectangular or square separation surface and a second rectangular or square separation surface are arranged in the flow region at two opposite walls of the duct-shaped casing in such a way, that the separation surface is attached to its related wall with a first lateral edge of the separation surface, and the separation surface protrudes into the flow region with a second lateral edge. Said second lateral edge is opposite to the first lateral edge, i. e. the first and second lateral edges are parallel sides of the rectangular separation surface. Moreover, the first separation surface partially overlaps the second separation surface. This overlapping takes place at the second lateral edges, which second lateral edges may be freely placed in the flow region. Preferably, the first separation surface and the second separation surface are inclined relative to a central axis of the flow region, particularly with the second lateral edges of both the first and the second rectangular or square separation surfaces being positioned lower than their first lateral edges. Compared to the first particularly specific embodiment with its rather helical airstream, the resulting airstream through the arrangement according to the second particularly specific embodiment follows a serpentine movement, which is essentially straighter and one-directional, specifically vertical, through the flow region, however, also in this configuration a velocity component in tangential direction is generated, which is particularly developed closer to the zone of overlapping separation surfaces.

The central axis of the flow region is preferably at least approximately vertically aligned, and the above-mentioned inclination of the first and second separation surfaces relative to the central axis of the flow region is specifically in a downwards direction. Moreover, the first lateral edges of the first and the second separation surfaces may be arranged at the same horizontal level. In order to enable the partial overlapping of the first and second separation surfaces, the inclination angle of the first separation surface may be different to the inclination angle of the second separation surface. An alternative embodiment thereto provides that the first lateral edge of the first separation surface is arranged higher than the first lateral edge of the second separation surface. In this case, the inclination angle of the first separation surface is preferably equal to the inclination angle of the second separation surface, but a provision of different inclination angles may be considered, too.

More specifically, the first and second separation surfaces may form a collaborative separation surface layer and at least two collaborative separation surface layers may be arranged in superimposed levels in the flow region. The arrangement of these at least two stacked collaborative separation surface layers may be realized in that way, that the second separation surface of the upper collaborative separation surface layer partially overlaps the first separation surface of the lower collaborative separation surface layer. By this means, a multilayer arrangement with a plurality of separation surfaces is provided, which cares for a gradually increased purification process, depending on the number of layers.

A third particularly specific embodiment of the present invention is characterized in that the duct-shaped casing encloses a flow region with a square cross-section. According to this specific embodiment, each one of a first, a second, a third and a fourth rectangular or square separation surface may be arranged in the flow region at a related one of the four walls of the duct-shaped casing. Said four walls are adjacently arranged clockwise or counter-clockwise, such that each separation surface is attached to its related wall with a first lateral edge and protrudes into the flow region with a second lateral edge, which is opposite to the first lateral edge. Furthermore, a partial overlapping of the separation surfaces is accomplished by an arrangement of the second lateral surfaces of the four separation surfaces in that way, that, from the first to the fourth separation surface, the related second lateral edge of a separation surface is positioned below the second lateral edge of the preceding separation surface. The first, the second, the third and the fourth separation surface are preferably inclined relative to the central axis of the flow region, and more specifically, also in this embodiment the inclination may be in a downwards direction in case of a vertically aligned central axis of the flow region.

More specifically, the four separation surfaces positioned on all four sides with steadily lower arrangement of their second lateral edges, the effect of generation of a radially and/or horizontally extended helical airstream is further increased, at least compared to the second particularly specific embodiment. Particularly, the airstream reaching the first and moving to the fourth separation surface, in this sequence, effects a helical movement of the airstream comparable to the performance of the first particularly specific embodiment with its circular flow range design, specifically due to the arrangement of the second lateral surfaces relative to each other. Similar to the previous embodiment, the four separation surfaces attached to the four walls of the duct-shaped casing may form a collaborative separation surface layer.

At least one of the rectangular or square separation surfaces in any of the afore-described embodiments with rectangular or square duct-shaped casing may be inclined relative to a central axis of the flow region enclosed by this casing both in a first horizontal direction and in a second horizontal direction, wherein the second horizontal direction is orthogonal to the first horizontal direction. The first lateral edge of the rectangular or square separation surface is particularly attached to the related wall of the duct-shaped casing at an inclination angle towards the horizontal. This twofold inclination may be implemented in either the rectangular flow range or in the square flow range as previously described. Said generation of a helical movement of the airstream is even further increased and more particularly extended in horizontal extension by an enhanced spiralling effect.

According to embodiments, the filter surfaces or areas, specifically said mesh grids, on or at a separation surface is split into at least two segments or elements per individual surface. This may be realized by at least two filter surfaces or areas on one separation surface, exemplarily on a continuous surface as previously described with first particularly specific embodiment.

Preferably, a free passageway, which may be a gap or a slit or the like, is provided for the airstream to pass at least a section of the flow region without any passage through a filter surface or filter area. A more preferred solution is characterized in that the entire flow region is provided or furnished with separation surfaces. Specifically, the free passageway or gap is provided between the at least first and second separation surfaces, and more specifically in a collaborative separation surface layer.

Moreover, the separation surface, particularly the filter surface or area, is coated with a coating layer. Said coated filter surface or area may be the mesh filter or the surface of the mesh filter. A particularly preferred coating layer is an oleophobic and/or hydrophobic layer. The provision of such a coating enhances the separation, particularly condensation, of substances, specifically grease separation or condensation on said mesh filter and a particle saturation of the mesh grid or filter can be delayed.

Preferably, the separation surface is made of or comprises a plastic or a metallic material. However, independently from the type of material selected for the separation surface, in particular the filter element, e. g. the mesh grid, the respective material has to be characterized by a resistance for temperature and/or specific chemicals, in particular as included in dishwasher detergents.

In order to still separate residual substances, in particular grease residuals, from the airstream, which has passed through the flow region with included separation surfaces, the separation and/or filtering device may comprise a final filter element, in particular a mesh grid, which filters out said residual substances, so that the airstream is at least nearly entirely purified. The final filter element may be arranged at an outlet of the separation and/or filtering device, notably at an outlet of the duct-shaped casing. Moreover, additionally or alternatively, a particle or fluid collector means, in particular a grease collector means, may by arranged in the flow region and downstream of the at least one separation surface, in particular at or close to the outlet of the duct-shaped casing.

According to a preferred embodiment of the present invention, the duct-shaped casing is designed with a conical longitudinal section, resulting in either extending or narrowing the cross-section of the flow range in airflow direction. This particularly ends up in an even further increased filtering effect, specifically by a skilful utilization of the diffuser effect.

The separation and/or filtering device may be characterized in that at least one of the guiding means, the separation surface, the filter surface, the stripping or removing means, the deflection means, the filter element, the particle or fluid collector means and the collaborative separation surface layer is or are removably arranged in the flow region. With such a removable arrangement, a particularly simple and full cleansing of the separation and/or filtering device is enabled, e. g. by disassembling an element, preferably all elements arranged in the flow region, from the interior of the duct-shaped casing. More specifically, the elements arranged in the flow region may be connected together for a simple disassembling. After such disassembling, the duct-shaped casing and the disassembled element(s) can be cleaned separated from each other, e. g. in a dishwasher.

A plurality of filter surfaces or filter areas or an elongated filter surface or filter area, which provides or provide a passage, preferably a filtering passage, for at least a part of the airstream may be positioned in or may spread over at least two different levels inside of the flow region. In that case, the plurality of filter surfaces or filter areas or the elongated filter surface or filter area may be characterized by different filter classes and/or degrees of separation. Such a provision of different filter classes and/or degrees of separation, which is preferably a stepwise or gradually reduction of a mesh size of the filter surface, may support an approximately even pollution of filter surfaces during a multilevel filtering process. According to one embodiment, the at least one separation surface comprises at least a section of at least one inner wall of the duct-shaped casing and/or at least a part of a support structure. Accordingly, the surface of the at least an inner wall section and/or the at least a part of the support structure may provide a surface structure making sure that the at least a portion of substances remains adhered thereto or gets caught thereon. In particular, said adhesion or catching of at least a portion of substances is performed by centrifugal force exerted on the substances e. g. during an at least approximately lateral or radial movement of the conveyed air.

The object is further achieved for an extraction device comprising a separation and/or filtering device according to the features of claim 18.

According to a further aspect of the invention, an extraction device is provided, which comprises a separation and/or filtering device according to anyone of the afore-described embodiments. The extraction device may be an extraction hood, which is arrangeable above a cooking hob. Alternatively, the extraction device may be an extraction unit of a combination appliance, which further includes a cooking hob. The separation and/or filtering device is preferably positioned downstream, in particular directly downstream, of an air inlet opening of the extraction device. In the case of the combination appliance, the air inlet opening may be positioned on a cooktop of the cooking hob.

The separation and/or filtering device is preferably arranged upstream of a suction device or unit, which is in particular an extraction fan.

More specifically, the extraction device further comprises an exhaust opening in order to provide an air discharge for conveyed air, so that the air is blown out into the atmosphere. Said exhaust opening is notably arranged at the end of an air channel downstream of the extraction fan. Moreover, the separation and/or filtering device is specifically arranged inside of said air channel of the extraction device.

The cooking hob, which is mainly the source for the aspirated cooking vapours to be purified by the extraction device, may be of any type including electric or gas cooking hobs. In particular, the electric cooking hob is an induction cooking hob. The cooking hob may further be an autarkic cooking appliance, particularly integrated in a countertop of kitchen furniture, or it may be part of a stove. Moreover, a top surface of said cooktop, which is accessible to a user of the appliance, may be used for putting cookware thereon, specifically in order to perform a cooking process. To this end, the cooking hob preferably comprises at least one heating element defining a cooking zone on the cooktop or, specifically, the glass plate, which is favourably made out of glass ceramics.

Novel and inventive features of the present invention are set forth in the appended claims.

The present invention will be described in further detail with reference to the drawings, in which
- Fig. 1: is a perspective view of a combination appliance comprising a cooking hob and a downdraft extraction device installed in a kitchen cabinet;
- Fig. 2: is a cross-sectional perspective view of the disassembled combination appliance of Fig. 1 with a frontal surface cut away and including a removable filter device;
- Fig. 3: is the filter device removed from the combination appliance of Figs. 1 and 2;
- Fig. 4: is a schematic perspective top view of a filter device with an arrangement of filter segments according to a first exemplary embodiment of the present invention;
- Fig. 5: is a perspective longitudinal section of the filter device of Fig. 4 indicated by V - V;
- Fig. 6: illustrates schematically a perspective longitudinal section of a filter device with a helical filter design according to a second exemplary embodiment of the present invention; and
- Fig. 7: is a side view of the interior arrangement of the filter device of Fig. 6.

In all figures the same or equivalent part are marked with the same reference numbers.

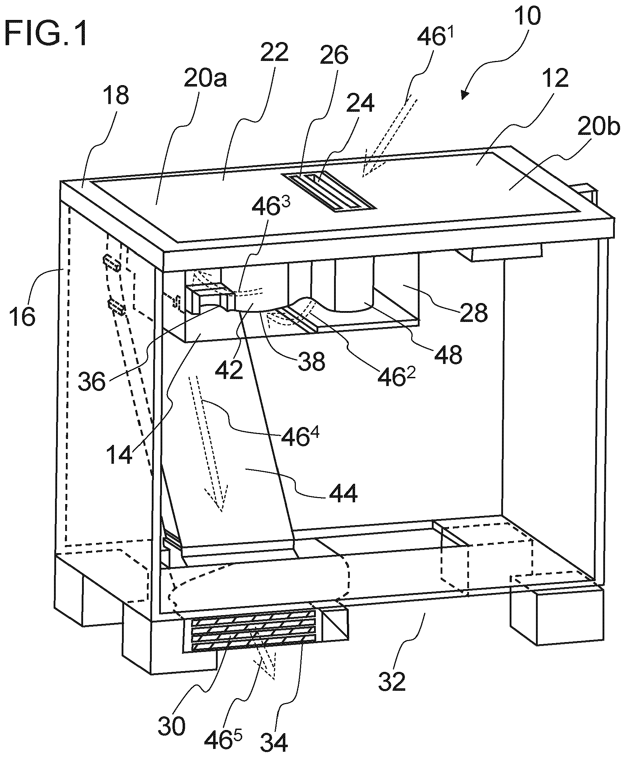

Fig. 1 illustrates a combination appliance 10 comprising a cooking hob 12 and a downdraft extraction device 14 installed in a kitchen cabinet 16. The cooking hob 12 is installed in a cut-out of a kitchen countertop 18 forming a top cover plate of the kitchen cabinet 16. The downdraft extraction device 14 is configured to take away cooking vapours generated during cooking processes, in particular when cooking with uncovered cookware. The cooking hob 12 comprises cooking regions 20a, 20b arranged on a left half and a right half of a worktop 22 of the cooking hob 12, which left and right halves are separated from each other by a suction opening 24 for an intake of the cooking vapours, the suction opening 24 being arranged alongside a worktop centreline. The suction opening 24 is covered by a cover grid 26 for preventing items, e. g. cookware, to fall into the suction opening 24.

A casing 28 of the extraction device 14 is shown in Fig. 1 in transparent illustration. Said casing 28 provides a closed outer shell or first channel for a flow of the sucked-in air including the cooking vapours on their way from the suction opening 24 to an exhaust opening 30 in a base area 32 of the kitchen cabinet 16. Said exhaust opening 30 is also covered, specifically by an outlet grille 34.

The flow of the sucked-in air through the extraction device 14 is driven by the operation of an extraction fan 36 arranged inside of the casing 28. Said extraction fan 36 comprises a bottom-sided intake opening 38 for sucking the conveyed air from the interior space of the casing 28.

The conveyed air exits the extraction fan 36 at an outlet (not shown) at the fan rear side, which outlet is connected to a first end of an air duct 44 designed as a rectangular tube. The air duct 44 forms a second channel arranged downstream the above-mentioned first channel. Directly at the passage from the fan outlet to the air duct 44, an air duct bending by 90 degrees is implemented, which redirects the air flow from horizontal to vertical downwards. The air duct 44 may be guided alongside a rear side of the kitchen cabinet 16 and may be bent again by 90 degrees close to a rear lower edge of the kitchen cabinet 16 in order to direct the airflow towards exhaust opening 30 in the base area 32 of the kitchen cabinet 16. Accordingly, the second end of the air duct 44 is connected to the exhaust opening 30. The embodiment illustrated in Fig. 1 shows a solution of the air duct 44 with an inclined section of its downwardly directed portion, directed slightly to the right. Naturally, a solution with said portion arranged in an exact vertical direction is considerable as well.

The course of the cooking vapours from the cooking area through the extraction device 14 to a re-entry into room air is illustrated in Fig. 1 by dotted arrows 46¹ to 46⁵. On their way through the extraction device 14, the cooking vapours pass through a filter device 48, which is arranged downstream directly behind the suction opening 24. Said filter device 48, which will be described in more detail further down below, is adapted to filter particles and droplets, in particular grease particles and droplets as well as moisture and odorous substances, out of the cooking vapours, in that purifying the cooking vapours in order to feed filtered air back to the room air.

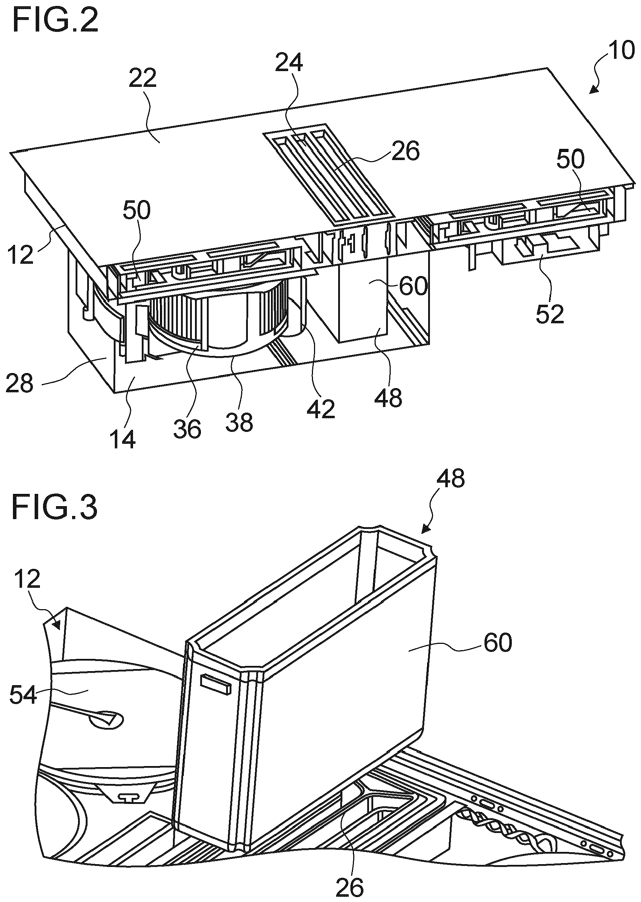

The cross-sectional view of Fig. 2 further shows two power boards 50, one for the left cooking region 20a and one for the right cooking region 20b, the power boards 50 providing cooking zones in the left and right cooking regions 20a, 20b with electrical power. In the present embodiment, as illustrated in Fig. 3 by a removed worktop 22, the cooking hob 12 is an induction cooking hob and the cooking zones are defined by induction coils 54 that are arranged below the worktop 22 of the cooking hob 12. Attached to the bottom side of the power board 50 assigned to the right cooking region 20b, a further circuit board is arranged forming a control electronics 52 for the combination appliance 10.

According to Fig. 3, the filter device 48 is removed from the suction opening 24 and illustrated in a raised position compared to the cooking hob 12. In order to remove the filter device 48, the cover grid 26 has to be removed prior to the removal of the filter device 48. After its removal, i. e. separation from the combination appliance 10, the filter device 48 may undergo a purification process during servicing activities performed on the extraction device 14.

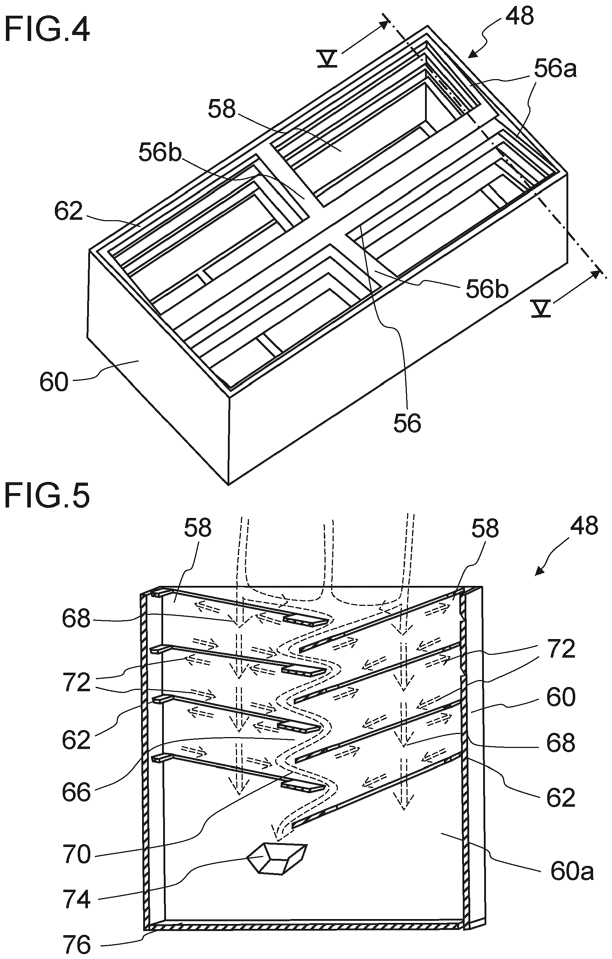

The structure, and particularly the interior, of a first example of the filter device 48 according to the present invention is illustrated by Figs. 4 and 5. Fig. 4, which is a schematic perspective top view of this specific filter device 48, shows an arrangement of multistage separation surfaces 56 (not illustrated in Fig. 3) stacked inside of a duct-shaped casing 60 having a rectangular cross-section. Each one of the separation surfaces 56 includes a pair of rectangular mesh grid segments 58 arranged side by side, which are framed by a retaining frame shaped as a double window that comprises an outer border 56a and a middle bar 56b. Said middle bar 56b is positioned such that, in the present example, the retaining frame includes two coextensive mesh grid segments 58. However, the structure of the separation surfaces is not limited to the design according to the illustrated example, but generally could include only one or more than two mesh grid segments 58 per separation surface. For a better illustration, only the retaining frames of the separation surfaces 56 are shown in Figs. 4 and 5, while the mesh grid segments 58 are presented transparently. The separation surfaces 56 are stacked and supported by a support structure (not illustrated in detail), which itself may be supported on and/or connected to an inner wall of the casing 60.

The alignment of the multistage separation surfaces 56, both in spatial terms and with respect to their assignment to each other, is shown by the perspective longitudinal section of the filter device 48 according to Fig. 5, which also depicts the actual operating position in vertical orientation, as can be seen in Figs 1 to 3. In general, the arrangement of multistage separation surfaces 56 comprises two stacks thereof, wherein each stack is a plurality of such separation surfaces 56, which are arranged equally spaced in parallel to each other within each stack and abutting the inner surface of one casing wall, more specifically by means of fixation to said support structure, with their first lateral edges 62. The two stacks of separation surfaces 56 are facing each other and their respective first lateral edges 62 abut opposite walls of the casing 60. The multistage separation surfaces 56 are not in a horizontal alignment but inclined downwards facing inwards. A couple of facing separation surfaces 56 on the same level roughly form a "V" in cross-sectional view, however, second lateral edges 64, which are opposite to the first lateral edges 62, of these two opposing separation surfaces 56 are not connected with each other, in fact, they are arranged by leaving a gap 66 open between them. Consequently, the inclination angles of the two opposing separation surfaces 56 are different. Moreover, the two stacks are arranged by a partial overlapping of the individual separation surfaces 56, so that their boundary surfaces next to the second lateral edges 64 perform a comb-type interlocking. This kind of arrangement of the two stacks provide a free transmission for an airstream through the plurality of gaps 66 between the second lateral edges 64 of the separation surfaces 56, which airstream follows a serpentine path around the second lateral edges 64.

As previously described, the separation surfaces are not impermeable over their entire areas, in fact, they are equipped with mesh grid segments 58. The mesh grid segments 58 provide a filtered passage for the airstream (indicated by arrows 68), which filter function particularly includes a filtered separation of grease and, at least to a certain degree, odorous substances. However, said filter function is realized in that, at least over time with plural operation efforts, the whole surface of the mesh grid segments 58 is not able to afford passage for the entire airstream accruing from the air intake effected by the extraction fan 36. Instead, a portion of the airstream passes the unfiltered serpentine pathway (indicated by serpentine arrow 70) through the plurality of gaps 66, but even if passing a gap 66 at an upper level, this airstream portion is spread again entirely over an underneath level, which allows an, again at least partially, filtered passage through any pair of mesh grid segments 58 further downstream. Moreover, due to said spreading over the entire cross-section at each level between two superimposed layers of separation surfaces 56, another portion of the airstream is guided both along the upper surfaces of the mesh grid segments 58 of the lower separation surfaces 56 and along the lower surfaces of the mesh grid segments 58 of the separation surfaces of the overlying layer of separation surfaces 56 (indicated by arrows 72). Due to the coarse surface condition provided by the mesh grid structure, substances contained in the airstream are stripped and hence removed from the airstream in a similar way as when passing through the mesh grid. Moreover, since the airstream does not follow a laminar flow, a swirling of the airstream is generated, which further enhances the particle filtering. As a result, the separation of substances, i. e. particles and/or droplets, from the airstream takes place in two ways, namely by a usual filtration during passage of a first portion of the airstream through the mesh grid segments 58 and by a stripping of substances during movement of a second portion of the airstream along the surfaces of the mesh grid segments 58.

In consequence of the provision of a free passage between the separation surface layers, the pressure loss due to particle filtering, in particular grease filtration, is decreased.

The separated grease particles and droplets collected on the upper surfaces of each separation surface layer as well as any humidity condensed at these separation surfaces 56 can flow along said upper surfaces towards the related second lateral edges 64, where these substances drop down and may be collected in a collection trough 74 positioned underneath the second lateral edge 64 of the lowermost separation surface. The collected non-volatile substances may be removed during regular servicing activities.

After passing the previously described multistage separation surfaces 56, the airstream may still comprise a small amount of unfiltered substances. These substances are finally removed from the airstream by means of a flat filter element 76, forming a last layer of the filter device 48, which flat filter element 76 extends over the entire cross-section of the interior of the filter device 48.

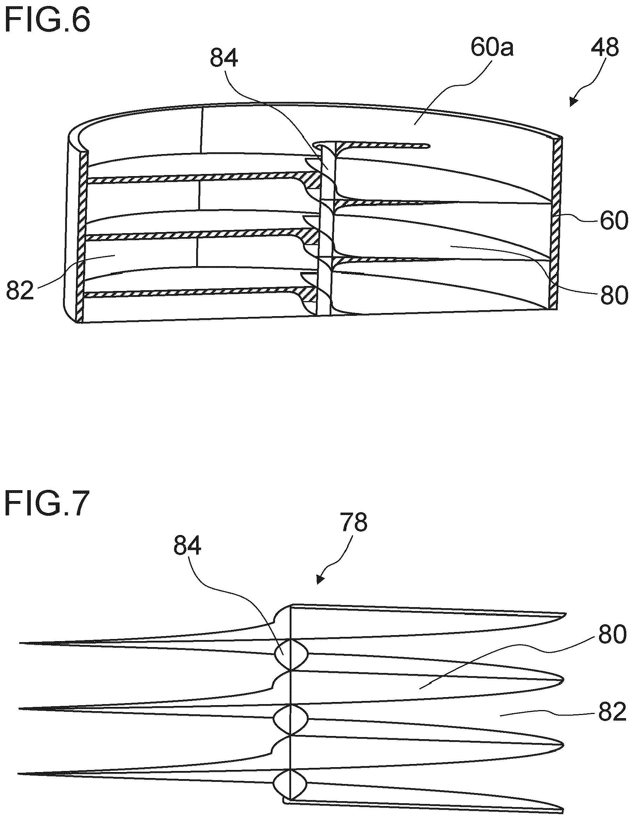

Fig. 6 illustrates a second exemplary embodiment of the filter device 48 according to the present invention. This second example is characterized by a circular duct-shaped casing 60, also including a multistage separation surface arrangement, which is also circular in its cross-section with a diameter equal to the inner diameter of the casing 60. In contrast to the structure of multistage separation surface arrangement according to the first example having a plurality of separate separation surfaces 56, the arrangement according to the second example comprises a continuously designed separation surface structure of helical shape and constructed in one piece. This circular embodiment of a separation surface spiral 78 also comprises a mesh grid surface 80, however, the previously described design with a plurality of mesh grid segments 58 according to the first example, illustrated by Figs. 4 and 5, is replaced by a continuous mesh grid surface area incorporated in the thread-like surface of the separation surface spiral 78. In further contrast to the above-described embodiment, the multiple free gap solution according to first example is replaced by a continuous helical pathway and the more serpentine movement, the airstream performs is replaced by a spiral movement.

Even though the designs of the first and the second example are different, the functionality with respect to a separation of substances from the airstream is similar. In the same manner as previously described with respect to Figs. 4 and 5, the airstream, entering the interior, i. e. a flow region 60a, of the duct-shaped casing 60 from above, is divided into a portion passing through the thread-like mesh grid surface 80 and a portion taking the way along the helical gap 82. As a result, also in this circular embodiment the separation of substances, i. e. particles and/or droplets, from the airstream takes place in two ways, namely by a usual filtration during passage of a first portion of the airstream through the mesh grid surface 80 and by a stripping of substances during movement of a second portion of the airstream along the surface of the mesh grid surface 58 by the helical movement through the helical gap 82, which may also be supported by a swirling effect coming up due to a non-laminar airflow.

Moreover, although there is no need for a support structure due to continuous and one-piece design of the separation surface spiral 78, in order to increase stability, also this embodiment may be supported in a similar way as the above-described first exemplary embodiment.

It has to be noted that the illustration according to Fig. 6 only shows an upper section of the entire circular filter device 48. The final flat filter element, which is also included in the second example, is not explicitly shown, however, in order to ensure a proper functionality of this filter device 48, said final flat filter element is present in the same way as described above. In the same way, a collection trough may be provided, too.

Particularly the embodiment according to Fig. 6, but also applying at least to a smaller extent to the embodiment according to Figs. 4 and 5, a separation surface, in particular at least one additional separation surface, is provided by at least a section of the inner wall of the duct-shaped casing 60. The inner surface of said inner wall section provides a surface structure, which causes at least a portion of substances to remain adhered to or to be separated from the conveyed air at the surface structure, when the air is guided alongside. Moreover, said adhesion of substances is additionally, or alternatively, performed by centrifugal force exerted on the substances e. g. during an at least approximately lateral or radial movement of the conveyed air. On the other hand, also in an additional or alternative way as regards the inner wall of the duct-shaped casing, a surface structure for an adhesion or separation of particles is provided by a support column 84 formed by a central stem the separation surface spiral 78 is turning around. Said support column 84 also provides a surface for an adhesion or separation of substances, which adhesion or separation may be executed by a specific surface finish and/or by means of inertial force.

Finally, Fig. 7 illustrates an isolated presentation of the interior arrangement of the circular filter device 48 of Fig. 6, which is the separation surface spiral 78 removed from the casing 60. A user of the combination appliance 10 may execute such removal of this element during a regular servicing activity in order to clean it separately in a dishwasher.

Although illustrative embodiments of the present invention have been described herein with reference to the accompanying drawings, it is to be understood that the present invention is not limited to these precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: combination appliance
- 12: cooking hob
- 14: downdraft extraction device
- 16: kitchen cabinet
- 18: kitchen countertop
- 20a,20b: cooking regions
- 22: worktop
- 24: suction opening
- 26: cover grid
- 28: casing
- 28a,28b: first and second casing parts
- 30: exhaust opening
- 32: base area
- 34: outlet grille
- 36: extraction fan
- 38: intake opening
- 42: fan housing
- 44: air duct
- 46^{1 to 5}: arrows indicating air flow
- 48: filter device
- 50: power boards
- 52: control electronics
- 54: induction coil
- 56: separation surfaces
- 56a: outer border
- 56b: middle bar
- 58: mesh grid segments
- 60: casing
- 60a: flow region
- 62: first lateral edge
- 64: second lateral edge
- 66: gap
- 68,70,72: arrows
- 74: collection trough
- 76: flat filter element
- 78: separation surface spiral
- 80: mesh grid surface
- 82: helical gap
- 84: support column

## Claims

1. A separation and/or filtering device (48) for separation and/or filtering of substances, particularly particles and/or droplets and/or odorous substances and/or volatile organic compound substances, e. g. grease particles and/or steam, from an airstream, the separation and/or filtering device (48) comprising a duct-shaped casing (60) enclosing a flow region (60a) for the airstream to flow therethrough, wherein at least one separation surface (56) configured to effect a separation of at least a portion of the substances is arranged in the flow region (60a),
**characterized in that**
guiding means are provided, in particular in the duct-shaped casing (60), the guiding means being configured to cause the airstream to at least partially slide along the separation surface (56) and/or to cause at least portions or sections of the airstream to slide along the separation surface (56), in particular along at least one surface area of the separation surface (56), wherein the at least one separation surface (56), in particular the at least one surface area of the separation surface (56), is configured to cause the separation of the at least a portion of the substances from the airstream, which at least a portion of substances remains adhered to or gets caught on the at least one separation surface (56), in particular the at least one surface area of the separation surface (56).

2. The separation and/or filtering device (48) according to claim 1,
**characterized in that**
the separation surface (56) comprises
- a filter surface (58, 80) or filter area, which provides a passage, preferably a filtering passage, for a part of the airstream, and/or
- a stripping or removing means (58, 80) for removing the portion of substances,
wherein the filter surface (58, 80) or area and/or the stripping or removing means (58, 80) preferably comprises or comprise a mesh filter or a surface of a mesh filter.

3. The separation and/or filtering device (48) according to claim 1 or 2,
**characterized in that**
at least one deflection means is included in the flow region and is configured to provide the airstream with at least one directional component orthogonally to a central axis of the flow region (60a) defined by the duct-shaped casing (60), the deflection means preferably including at least one separation surface (56) and/or at least one surface area of the separation surface (56).

4. The separation and/or filtering device (48) according to claim 3,
**characterized in that**
the at least one deflection means, particularly at least a first and a second deflection means, is configured and/or arranged in the flow region (60a) such that at least a part or section of the airstream performs a serpentine and/or helical movement.

5. The separation and/or filtering device (48) according to anyone of the preceding claims,
**characterized in that**
the duct-shaped casing (60) encloses a flow region (60a) with a circular or oval-shaped cross-section, wherein the separation surface (56) particularly being arranged in a helical shape with at least one full spiral turn, more particularly with a plurality of continuous spiral turns.

6. The separation and/or filtering device (48) according to anyone of the claims 1 to 4,
**characterized in that**
the duct-shaped casing (60) encloses a flow region (60a) with a rectangular or square cross-section, wherein at least a first rectangular or square separation surface (56) and a second rectangular or square separation surface (56) are arranged in the flow region (60a) at two opposite walls of the duct-shaped casing (60) such that the separation surface (56) is attached to a related wall with a first lateral edge (62) thereof and protrudes into the flow region (60a) with a second lateral edge (64), which is opposite to the first lateral edge (62), and wherein the first separation surface (56) partially overlaps the second separation surface (56) at their second lateral edges (64), the first separation surface (56) and the second separation surface (56) preferably being inclined relative to a central axis of the flow region (60a).

7. The separation and/or filtering device (48) according to claim 6,
**characterized in that**
the central axis of the flow region (60a) is at least approximately vertically aligned,
wherein the first lateral edges (62) of the first and the second separation surfaces (56) are arranged at the same horizontal level and the inclination angle of the first separation surface (56) is different to the inclination angle of the second separation surface (56), or
wherein the first lateral edge (62) of the first separation surface (56) is arranged higher than the first lateral edge (62) of the second separation surface (56) and the inclination angle of the first separation surface (56) is preferably equal to the inclination angle of the second separation surface (56).

8. The separation and/or filtering device (48) according to claim 7,
**characterized in that**
the first and second separation surfaces (56) form a collaborative separation surface layer, wherein at least two collaborative separation surface layers are arranged in superimposed levels in the flow region (60a) such that the second separation surface (56) of the upper collaborative separation surface layer partially overlaps the first separation surface (56) of the lower collaborative separation surface layer.

9. The separation and/or filtering device (48) according to anyone of the claims 6 to 8,
**characterized in that**
the duct-shaped casing (60) encloses a flow region (60a) with a square cross-section, wherein each one of a first, a second, a third and a fourth rectangular or square separation surface (56) is arranged in the flow region (60a) at a related one of the four walls of the duct-shaped casing (60), which four walls are adjacently arranged clockwise or counter-clockwise, such that each separation surface (56) is attached to its related wall with a first lateral edge (62) and protrudes into the flow region (60a) with a second lateral edge (64), which is opposite to the first lateral edge (62), and wherein a partial overlapping of the separation surfaces (56) is accomplished by an arrangement of the second lateral edges (64) of the four separation surfaces (56) **in that** way, that, from the first to the fourth separation surface (56), the related second lateral edge (64) of a separation surface (56) is positioned below the second lateral edge (64) of the preceding separation surface (56), the first, the second, the third and the fourth separation surfaces (56) preferably being inclined relative to the central axis of the flow region (60a) .

10. The separation and/or filtering device (48) according to anyone of the claims 6 to 9,
**characterized in that**
at least one of the rectangular or square separation surfaces (56) is inclined relative to a central axis of the flow region (60a) both in a first horizontal direction and in a second horizontal direction, which second horizontal direction is orthogonal to the first horizontal direction, wherein particularly the first lateral edge (62) of the rectangular or square separation surface (56) is attached to the related wall of the duct-shaped casing (60) at an inclination angle towards the horizontal.

11. The separation and/or filtering device (48) according to anyone of the claims 5 to 10,
**characterized in that**
a free passageway, in particular a gap (66, 82), is provided for the airstream to pass at least a section of the flow region (60a), preferably the entire flow region (60a) furnished with separation surfaces (56), without any passage through a filter surface (58, 80) or filter area, the free passageway or gap (66, 82) particularly being provided between the at least first and second separation surfaces (56), more particularly in a collaborative separation surface layer.

12. The separation and/or filtering device (48) according to anyone of the preceding claims,
**characterized in that**
the separation surface (56), particularly the filter surface (58, 80) or area, more particularly the mesh filter or the surface of the mesh filter, is coated with a coating layer, the coating layer preferably being an oleophobic and/or hydrophobic layer.

13. The separation and/or filtering device (48) according to anyone of the preceding claims,
**characterized in that**
a final filter element (76), in particular a mesh grid, and/or
a particle or fluid collector means (74), in particular a grease collector means,
is or are arranged in the flow region (60a) and downstream of the at least one separation surface (56), in particular at or close to an outlet of the separation and/or filtering device (48) .

14. The separation and/or filtering device (48) according to anyone of the preceding claims,
**characterized in that**
the duct-shaped casing (60) is designed with a conical longitudinal section.

15. The separation and/or filtering device (48) according to anyone of the preceding claims,
**characterized in that**
at least one of the guiding means, the separation surface (56), the filter surface (58, 80), the stripping or removing means (58, 80), the deflection means, the filter element (76), the particle or fluid collector means (74) and the collaborative separation surface layer, preferably all elements arranged in the flow region (60a), is or are removably arranged in the flow region (60a).

16. The separation and/or filtering device (48) according to anyone of the preceding claims,
**characterized in that**
a plurality of filter surfaces (58, 80) or filter areas or an elongated filter surface or filter area, which provides or provide a passage, preferably a filtering passage, for at least a part of the airstream, is or are positioned in or spreads over at least two different levels inside of the flow region (60a), wherein the plurality of filter surfaces (58, 80) or filter areas or the elongated filter surface or filter area is **characterized by** different filter classes and/or degrees of separation.

17. The separation and/or filtering device (48) according to anyone of the preceding claims,
**characterized in that**
the at least one separation surface (56) comprises at least a section of at least one inner wall of the duct-shaped casing (60) and/or at least a part of a support structure (84), wherein the at least a portion of substances remains adhered to or gets caught on the at least a section of the at least one inner wall and/or the at least a part of the support structure (84) in particular by centrifugal and/or inertial force.

18. An extraction device (14), in particular an extraction hood or an extraction unit of a combination appliance (10), comprising a separation and/or filtering device (48) according to anyone of the preceding claims, the separation and/or filtering device (48) preferably being positioned downstream, preferably directly downstream, of an air inlet opening (24) of the extraction device (14), in particular an air inlet opening (24) positioned on a cooktop (22) of a cooking hob (12) of the combination appliance (10).
